Europäisches Patentamt

European Patent Office

Office européen des brevets

(11) Publication number: **0 093 212**
**B1**

# EUROPEAN PATENT SPECIFICATION

(45) Date of publication of patent specification: **27.08.86**

(21) Application number: **82302266.0**

(22) Date of filing: **04.05.82**

(51) Int. Cl.⁴: **C 04 B 35/00, C 04 B 35/48**

(54) **Refractory material.**

(43) Date of publication of application:
**09.11.83 Bulletin 83/45**

(45) Publication of the grant of the patent:
**27.08.86 Bulletin 86/35**

(84) Designated Contracting States:
**DE FR GB IT NL SE**

(56) References cited:
**US-A-2 984 576**
**US-A-3 194 671**
**US-A-3 359 213**
**US-A-3 434 854**

**REVUE INTERNATIONALE DES HAUTES
TEMPERATURES ET DES REFRACTAIRES, vol.
10, no. 1, January/February 1973, pages 31-36,
Paris, FR. E. ROTHWELL: "A high temperature
furnace fabricated from castable zirconia"**

(73) Proprietor: **REMET CORPORATION**
**P.O. Box 278**
**Bleachery Place Chadwicks, NY 13319 (US)**

(72) Inventor: **Feagin, Roy Chester c/o Remet
Corporation**
**P.O. Box 278, Bleachery Place**
**Chadwicks, NY 13319 (US)**

(74) Representative: **Pennant, Pyers et al
Stevens, Hewlett & Perkins 5 Quality Court
Chancery Lane
London, WC2A 1HZ (GB)**

Courier Press, Leamington Spa, England.

EP 0 093 212 B1

# 0 093 212

**Description**

This invention relates to the use of a relatively stable acidic aqueous colloidal zirconia sol as the bonding medium for specific refractories.

A procedure that is well-known has been used in the past for making ceramic shapes, namely mixing a binder and a gelling agent with a refractory and allowing the mix to chemically set or gel to form a bond and then firing the body. Typically many shapes have been made using sodium silicate, potassium silicate, colloidal silica, and hydrolyzed ethyl silicate as bonds. However, to obtain the greatest refractoriness of a body, a bond leaving a residue of a more refractory oxide is preferable. For example, alumina and zirconia produce high temperature bonds for refractories.

US—A—4,025,350 shows the use of an aqueous solution of a zirconium salt with a gelling inducing agent and a gelling delaying agent and a refractory powder to form a refractory article. This composition requires additional gelling agents for control thereby increasing costs and control problems. Also the by-products of the gelation of the zirconium salt would need to be eliminated from the refractory during firing. There is also an added cost of the zirconium salt versus the oxide.

US—A—4,201,594 describes the binding of refractory materials using zirconium salts and incorporating gelling agents and gel delaying agents. For the same reasons these compositions are less desirable.

US—A—3,434,854 discloses a high temperature insulating material which is formed by mixing a fibrous refractory material with a bonding agent consisting essentially of an aqueous solution of a zirconium salt such as zirconium acetate and the drying and hardening the mixture at room temperature. No gelation of the binder is involved in the method disclosed in US—A—3,434,854; the setting of the mixture being solely due to the removal of moisture from the mix by evaporation.

"Revue Internationale des Haute Temperatures et des Refractaires", vol 10, No. 1, Jan/Feb 1973, pages 31—36 teaches the use of a refractory composition comprising calcia-stabilized zirconia particles as the refractory material, a solution of a zirconium salt or a zirconium hydroxide sol as a binder, and magnesium hydroxide as a pH stabilizer. Unfortunately, the bonding produced by the use of zirconium hydroxide is poor due to both the chemical and the physical characteristics of the zirconium hydroxide particles.

The production of aqueous suspensions of colloidal hydrous zirconia are the subject of US—A—3,359,213. Furthermore, US—A—3,758,316 describes a process for producing a refractory from a refractory powder and a binder precursor which would include colloidal zirconia, but this process also requires the addition of a gelling agent.

US—A—2,984,576 describes an unfired mixture of a refractory material bonded with a zirconia or hafnia sol in which the percentage of solids in the dispersed phase is at least 30%. According to this patent, the refractory and the zirconia sol are ball-milled to give good mixing and the mixture is hardened by drying. No gelation of the sol is involved in this process.

The basic principle of the present invention is to make a refractory mix comprising a refractory material and a stable acidic zirconia sol. Thus, the present invention provides a method of making a refractory shape comprising mixing a refractory material with, as binder, an aqueous zirconia sol and then forming the mix into the desired shape characterized in that the aqueous zirconia sol is an acid-stabilized, aqueous colloidal zirconia sol and that the refractory material comprises an active refractory material capable of gelling the sol and optionally a relatively inert refractory material, the active refractory material being present in an amount effective to gel the sol and wherein, after the mix has been formed into the desired shape, the sol is allowed to gel.

One would expect that highly refractory materials would be relatively inert to the acid stabilized zirconia sol. However, it has been found that a number of refractories are not totally inert to the sol and actually react with the sol to cause gelation of the sol. Very rapid gels or slow gels can be produced depending upon the particular type of active refractory, its particle size distribution, and its percentage in the refractory mix. Some examples of active refractories which will cause gelation with the acid stabilized zirconia sol are alkali and alkaline earth metal aluminates, silicates, zirconates, stannates, titanates, zirconium silicates and oxides. Specific examples include calcined magnesium oxide, electrically fused magnesium oxide, calcium oxide, electrically fused calcium oxide, mono calcium aluminate, calcium aluminate cements, fused cordierite, high alkali glasses, magnesium aluminate, magnesium aluminum silicate, magnesium zirconate, magnesium silicate, mangesium zirconium silicate, magnesium ferrite, magnesium titanate, magnesium stannate, calcium zirconate, calcium silicate, calcium zirconium silicate, calcium titanate, calcium stannate, barium zirconate, barium aluminum silicate, barium aluminate, barium zirconium silicate, barium stannate, barium titanate, barium silicate, strontium zirconate, strontium stannate, strontium zirconium silicate, strontium silicate, strontium aluminum silicate, strontium titanate, electrically fused calcium oxide stabilized zirconia, electrically fused magnesium oxide stabilized zirconia, iron chromite, Zeolex® 23, wollastonite, bentonite, strontium aluminate, forsterite, calcium aluminum silicate, fluorspar, fluorbarite, lithium zirconate, lithium aluminate, lithium silicate, lithium aluminum silicate, lithium titanate, lithium zirconium silicate, and other refractory materials which are reactive with the zirconia sol. Some relatively non-reacting refractory materials are monoclinic zirconia, hafnia, alumina, bauxite, mullite, sillimanite, zircon, ceria, thoria, silicon nitride, silica and other minerals which do not

2

contain any large amounts in their structure of the alkaline and alkaline earth metallic oxides or impurities present that may react with the sol.

It is also possible to use this system as a bond for various fibers made from aluminosilicates, low alkali glasses, alumina, zirconia, silica, and various organic fibers such as cotton, rayon, nylon, other synthetic fibers.

The aqueous zirconia sols used in the examples given in this specification are acidic in nature ranging in pH from about 0.3 to 6.0. The particle size of the zirconia particle is generally small, on the order of 25 millimicrons and smaller. The sol is stabilized by acids such as nitric, hydrochloric, acetic, etc. The gelling action of the sol with the "active" refractory is believed to be due to a reaction of the acid with the "active" refractory, producing a "salt", which reaction raises the pH thereby lowering the sol stability. Also, the salt formed possibly catalyzes the gelling of the sol. This gelling action bonds the refractory into a strong body.

Several factors govern the characteristics of the refractory body bonded with the zirconia sol. The type of acid in the sol, the particle size and age of the sol, the percentage of zirconia in the sol, the percentage and type of "active" refractory in the mix, its particle size distribution, temperature, and mixing conditions.

The listing of potential "active" refractories shows the presence in many cases of an alkaline or alkaline earth type oxide present in the structure of the refractory or that the "active" refractory is subject to reaction with an acid. The presence of such "active" refractories, serving to react with the sol not only causes gelation but also might serve as sintering aids for certain refractory systems. The comparative scratch hardness of bonded refractory shapes after firing serves as a measure of sintering action by the "active" refractory.

One procedure for utilizing this invention is to produce cast refractory shapes by mixing the zirconia sol with at least one "active" refractory. The balance of the refractory may include a relatively inert refractory. In some instances, depending upmn the nature of the active refractory, the total refractory may be of the active type. In other instances, the "active" refractory may be a very minor portion of the total refractory in the mix. Particle size distribution and chemical nature of the active refractory are two of the major factors in determining the amount of "active" refractory constituent.

Various refractory shapes can be cast using this invention to produce practical products, such as metal melting crucibles, boats, tundishes, pouring ladles, pouring cups, tubes, rods, slabs, bricks, saggers, kiln furniture, kiln car tops, open hearth door facings, kiln parts, pouring nozzles, furnace liners, and others. Such mixtures can also be used to cast dental and jewellery molds for metal casting. In particular, some of these mixes are especially suitable for molds for casting superalloys, stainless steels, niobium, tantalum, titanium, and molybdenum. By selection of a high temperature inert refractory, or low-activity "active" refractory, such as zirconia, hafnia, ceria, alumina, yttria, lanthana, a foundry mold can be produced having an extremely high PCE value and having low reactivity with some of the above-mentioned reactive metals.

If desirable, pressing mixes can be made which will "set" or "gel" in predetermined times in order that a refractory shape may be made by pressing and then become set or gelled.

Thin or thick films may be made from mixes which may be cast on a belt or form and then becoming gelled or set. Coatings may be dipped or sprayed on to a form or shape, and then allowed to gel.

Mixes according to this invention may be formed into shapes by injection molding. Present ceramic injection molding techniques usually call for various temporary bonds for the refractory body to allow for ease of molding. Examples are costly waxes, resins, plastics, etc. These organic materials are burned out without leaving a high temperature bond, and shrinkage occurs during loss of organic material. The present invention provides a "green" bond and a fired bond in the refractory body. This technique can be used to mold various-intricate shapes such as spindles, nozzles, ceramic cores for metal castings, ceramic turbine blades and vanes, shell mold parts for metal casting, and various other shapes as desired.

A primary application for this invention is to make cast refractory bodies which will set or gell at controlled times. A proportion of "active" refractory may be adjusted according to the set time required for the mass. This percentage varies with the particular "active" refractory. The resulting refractory mix can be then mixed with a suitable amount of the zirconia sol to a heavy pouring consistency and poured or cast into a mold form and allowed to set. Particle size distribution of the refractory mix may be varied according to the desired results, strength, settling within the mold, and gel times. It is usually advantageous to allow adequate time for satisfactory mixing of the refractory before casting into a mold. This depends upon the size of the mold and the equipment used to handle the mix. If a small volume hand mix is used, mixing can usually be carried out in a very short period of time such as one to two minutes and then the mix can be adjusted to gel or set very rapidly. I prefer a relatively fast gel time of 5 to 30 minutes for relatively fast production of shapes. It may be desirable to remove bubbles from the mix and to incorporate suitable wetting and defoaming agents to make a relatively bubble-free or void-free mass. Time may be needed to completely wet in the mass and to deair before casting can be made. Ideally, gelation should occur as soon as practical after pouring. After gelation, the formed shape may be dried and then fired to a temperature sufficient to harden the shape.

According to a preferred embodiment of the present invention, a refractory casting mold is made by a method comprising the steps of:—

a) making a mixture of an acid-stabilized, aqueous, colloidal zirconia sol and a refractory material, said refractory material comprising an active refractory material capable of gelling said sol after a suitable non-gel working period;

b) applying said mixture to a pattern mold;

c) allowing said mixture to gel on said pattern; and

d) removing the pattern from the gelled mixture.

According to a further embodiment, the present invention provides a method of making a shell mold for receiving molten metal which method comprises the steps of:—

a) making a mixture of acid-stabilized, aqueous, colloidal zirconia sol and a refractory material, said refractory material comprising an active refractory material capable of gelling said sol after a suitable non-gel working period;

b) applying said mixture to a pattern mold;

c) sprinkling coarse refractory material over the coated pattern;

d) allowing the mixture to gel on said pattern;

e) applying a further coating of the mixture according to a) above to said coated pattern mold;

f) repeating the sequence of steps c) to e) above in order to build up a refractory shell over the pattern of sufficient thickness for metal casting;

g) removing the pattern mold from the resulting shell; and

h) drying and heating said shell to a suitable temperature to form a shell mold for receiving molten metal.

In the above-described method of making a shell mold for metal casting the refractory on the first coating of the mixture is preferably different from the refractory on the second coating of the said mixture.

The present invention also provides a method of making a metal casting comprising forming a metal casting mold as described above and pouring molten metal into said mold.

To illustrate this invention, the data in Table 1 shows the percentage of active refractory that might be mixed with an inert refractory, such as tabular alumina, to produce specific set or gel times. The refractory is mixed with the zirconia sol containing 20% $ZrO_2$ and having a pH of 0.6. The alumina portion was composed of 50% 325 mesh (45 μm) and finer tabular alumina and 50% 60 mesh (250 μm) and finer tabular alumina as supplied by Alcoa. The active refractory percentage is calculated on the basis of the total amount of refractory used for the final mix.

The samples indicated in Table 1 all had good green strength and when fired separately to 1200°F (650°C), 1800°F (980°C), 2000°F (1090°C) and 2500°F (1370°C) had excellent fired strengths.

Another series of similar experiments to those in Table 1 were carried out according to Table 2 in which the tabular alumina refractory base was 25% 325 mesh (45 μm) and finer and 75% 60 mesh (250 μm) and finer. This Table shows the gel times for the various mixes using the active refractory. These were mixed with the same zirconia sol as was used in Table 1. After gelling these samples had excellent green strength and after firing to the same temperature conditions had excellent fired strength. In all cases, the strength at 2500°F (1370°C) was greater than that fired to temperatures below 2500°F (1370°C).

Some unique characteristics were noted about the compositions described in Table 1. A series of test specimens approximately 1" thick, 1" wide and 2.375" long (2.5 cm×2.5 cm×6 cm) were prepared in a mold using the same composition as prepared in Table 1. They were allowed to set after gelation for 30 minutes and then removed from the mold. After removing from the mold, the specimen was set out in the air to air dry overnight and then oven dried for 4 hours at 120°C to remove all the water from the shape and then placed into a dessicator for cooling. It was then removed and immediately measured. It was noted that all specimens showed some shrinkage from the mold dimension on the order of about one-half to one percent. After the specimens were dried, they were then heated to a temperature of 1200°F (650°C) and maintained at that temperature for 2 hours and then allowed to cool to room temperature and remeasured. After measuring, the specimens were then reheated to 1800°F (980°C) and held for 2 hours at temperature, cooled, and then remeasured. This same heating was carried out separately at 2000°F (1090°C) and 2500°F (1370°C) after which time measurements were made on the specimens. It was noted that on many specimens some very small to fairly sizeable permanent expansion occurred after cooling. The data in Table 2 shows the permanent expansion obtained on a number of the specimens cast. The negative value indicates shrinkage. The remainder of the figures indicate permanent expansion.

It can be observed from this Table that some substantial expensions occur on certain specimens. These expansions are not necessarily related to the proportion of active refractory but are definitely attributed to the presence of the active refractory. Each composition probably acts in a different manner and produces different reaction products which govern the amount of expansion obtainable. This may be a means for minimizing shrinkage during firing of refractory bodies utilizing this zirconia sol bonded system. Normally when considerable sintering occurs on firing a refractory to a high temperature, considerable shrinkage occurs with the sintering. It should be noted that several compositions in the tabulation show relatively low shrinkage even when fired at 2500°F (1370°C).

The following are examples of other refractory mixes used with the acid stabilized zirconia sol and illustrating the use of "active" refractories.

## Example I

| Composition | |
|---|---|
| Electrically fused calcium oxide stabilized zirconium oxide −325 mesh (45 μm) | 30 grams |
| Fused magnesium oxide −325 mesh (45 μm) | 1 gram |
| Tabular alumina 60 mesh (250 μm) and finer | 150 grams |
| Tabular alumina −28+43 mesh (~383—644 μm) | 120 grams |

This refractory composition was mixed with 35 ml acid stabilized zirconia sol containing 20% $ZrO_2$. It was then poured into a rubber mold. The gel time was determined to be approximately 5 minutes. After 30 minutes, the sample was removed from the mold and by means of a diamond saw was cut into test specimens for modulus of rupture measurements. Unfired strength of this mix was approximately 57 psi (0.4 $N/mm^2$). Samples was fired to 2500°F (1370°C) held for two hours and cooled to room temperature, and modulus of rupture was determined as 575 psi (4 $N/mm^2$). A similar firing to 2700°F (1480°C) for two hours and then cooling showed a modulus of rupture of 910 psi (6.3 $N/mm^2$). A firing to 2900°F (1590°C) for two hours and cooled showed a modulus of rupture of 1888 psi (13 $N/mm^2$).

## Example II

| Composition: | |
|---|---|
| Tabular alumina −325 mesh (45 μm) | 240 grams |
| Electrically fused magnesium oxide | 2 grams |

This was mixed with 45 ml of the same zirconia sol as in Example I. The gel time on this mix was approximately 4 1/2 minutes. The green modulus of rupture was not determined but specimens fired to 2000°F (1090°C) for two hours and cooled showed a modulus of rupture of 234 psi (1.6 $N/mm^2$). Firing to 2500°F (1370°C) for two hours and cooled showed the modulus of rupture to be 1164 psi (8 $N/mm^2$). Firing to 2700°F (1480°C) for two hours and cooling showed a modulus of rupture of 2995 psi (20.7 $N/mm^2$). A specimen fired to 2900°F (1590°C) for two hours showed a modulus of rupture of 5674 psi (39.2 $N/mm^2$).

## Example III

| Composition: | |
|---|---|
| EF Zirconium oxide, calcium stabilized −325 mesh (45 μm) | 170 grams |
| −50+100 mesh (150—300 μm) −325 mesh (45 μm) | 160 grams |
| −12+35 mesh (500 μm—1.7 mm) −325 mesh (45 μm) | 80 grams |

This refractory composition was mixed with 30 ml of the zirconia sol used in Example I. The gel time was 8 minutes.

The modulus of rupture measurements after firing specimens to the particular temperatures for two hours and testing after cooling are as follows:

| | Modulus of rupture pounds per sq.inch ($N/mm^2$) |
|---|---|
| Unfired | 278 (1.9) |
| 2000°F (1090°C) | 479 (3.3) |
| 2500°F (1370°C) | 1888 (13) |
| 2700°F (1480°C) | 2019 (13.9) |
| 2900°F (1590°C) | 2623 (18.1) |

Test specimens from Examples I, II and III were also measured before firing and after each firing and showed the following percentage permanent expansion (+) or shrinkage (−):—

| Firing | | Examples | |
| Temperature | I | II | III |
|---|---|---|---|
| 2000°F (1090°C) | +0.08 | −0.09 | −0.11 |
| 2500°F (1370°C) | +0.29 | −0.46 | −0.51 |
| 2700°F (1480°C) | +0.40 | −1.60 | −0.50 |

The development of some permanent expansion could be helpful in eliminating or minimizing settling and drying shrinkage on some compositions, thereby increasing dimensional accuracy in making shapes. The following is an example of typical shell mold system possible by the use of this invention:

| Composition: | |
|---|---|
| Electrically fused calcium oxide stabilized zirconium oxide | 2000 grams |
| Zirconia sol containing 20% $ZrO_2$ | 500 grams |
| Concentrated hydrochloric acid | 17 ml. |
| Wetting agent—Sterox® NJ | 15 drops. |

This slurry was prepared to a viscosity of 34 seconds as measured by the Zahn#4 cup. Sheets of wax, approximately 1/8″ (3.2 mm) thick and 2 1/2″ (63.5 mm) wide by 5 1/2″ (139.7 mm) long were dipped into this slurry and immediately stuccoed while wet with a −50+100 mesh (150—300 µm) zirconia of the same composition as used in the slurry. After dipping several specimens, the slurry was diluted with the zirconia sol to a viscosity of 15 seconds and a further dip was applied after the first dip had dried overnight. While the second coating was still wet, it was stuccoed with a relatively coarse zirconia granule of a −12+35 mesh (500 µm—1.7 mm) of the same composition as the material in the slurry. This was repeated for additional coatings and a final seal coat was applied, making a total of 6 stucco layers and 7 slurry layers. Two dips were applied per day through the final dip. The dipped specimens were then allowed to dry for 2 days and the wax was melted out. The specimens were then cut into strips 1″ (25.4 mm) wide, dried and then tested for unfired strength. Six specimens were tested giving an average modulus of rupture value of 500 psi (3.5 N/mm$^2$). Additional specimens were fired for 2 hours to various temperatures beginning at 2000°F (1090°C) and cooled back to room temperature and tested. The MOR after firing to 2000°F (1090°C) was 220 psi (1.5 N/mm$^2$). The MOR after firing to 2200°F (1200°C) and cooling to room temperature was 300 psi (2.1 N/mm$^2$). The MOR increased to 1200 psi (8.3 N/mm$^2$) after firing to 2500°F (1370°C). This indicated a substantial strength was obtainable on a shell mold composition utilizing this invention.

TABLE 1

| Sample | Type of active refractory | Wt.% Active refractory | Gel time |
|---|---|---|---|
| 1 | Calcium Aluminate Cement | 5.0 | Immed. |
| 2 | Calcium Aluminate Cement | 1.0 | 3 min. |
| 3 | Calcium Aluminate Cement | 2.0 | 4 min. |
| 4 | Calcium Aluminate Cement | 0.5 | 45 min. |
| 5 | Magnesium Zirconate | 1.0 | 6 min. |
| 6 | Magnesium Zirconate | 0.5 | 2 hr.+ |
| 7 | Magnesium Zirconium Silicate | 1.0 | Overnight |
| 8 | Magnesium Zirconium Silicate | 5.0 | 55 min. |
| 9 | Magnesium Zirconium Silicate | 7.5 | 12 min. |
| 10 | Magnesium Zirconium Silicate | 10.0 | 10 min. |
| 11 | MgO T-139[1] −325 Mesh (45 µm) | 1.0 | 90 sec. |
| 12 | MgO T-139 −325 Mesh (45 µm) | 0.8 | 2 min. |

TABLE 1 (cont.)

| Sample | Type of active refractory | refractory | Wt.% Active Gel time |
|---|---|---|---|
| 13 | MgO T-139 −325 Mesh (45 µm) | 0.6 | 4 min. |
| 14 | MgO T-139 −325 Mesh (45 µm) | 0.4 | 10 min. |
| 15 | Calcium Zirconium Silicate | 1.0 | Overnight |
| 16 | Calcium Zirconium Silicate | 5.0 | 20 min. |
| 17 | Calcium Zirconium Silicate | 3.0 | 28 min. |
| 18 | Calcium Zirconium Silicate | 7.5 | 7 min. |
| 19 | Calcium Zirconate | 1.0 | Overnight |
| 20 | Calcium Zirconate | 5.0 | 1 hr.+ |
| 21 | Calcium Zirconate | 7.5 | 90 sec. |
| 22 | Calcium Zirconate | 10.0 | Immed. |
| 23 | CaO | 1.0 | Instant |
| 24 | CaO | 0.1 | 1 hr.+ |
| 25 | CaO | 0.25 | 60 sec. |
| 26 | CaO | 0.5 | Instant |
| 27 | Iron Chromite | 1.0 | Overnight |
| 28 | Iron Chromite | 5.0 | 30 sec. |
| 29 | Iron Chromite | 3.0 | Overnight |
| 30 | Iron Chromite | 4.0 | 2 hrs. |
| 31 | Iron Chromite | 5.0 | 9 min. |
| 32 | Iron Chromite | 6.0 | 5 min. |
| 33 | Zeolex 23[2] | 1.0 | Overnight |
| 34 | Zeolex 23 | 5.0 | Instant |
| 35 | Zeolex 23 | 2.0 | 8 min. |
| 36 | Zeolex 23 | 3.0 | Instant |
| 37 | Winco Cordierite[3] −200 Mesh (75 µm) | 1.0 | Overnight |
| 38 | Winco Cordierite −200 Mesh (75 µm) | 5.0 | 1 hr.+ |
| 39 | Winco Cordierite −200 Mesh (75 µm) | 7.0 | 12—15 min. |
| 40 | Winco Cordierite −200 Mesh (75 µm) | 8.0 | 8 min. |
| 41 | Wollastonite | 1.0 | 7—11 min. |

[1] Manufactured by C.E. Minerals, King of Prussia, Pa.
[2] Trademark of J. M. Huber Corp., Baltimore, Md.
[3] Manufactured by Winco Minerals, E. Aurora, N.Y.

# 0 093 212

## TABLE 2
Permanent expansion in thousandths of inch at firing temperature

| Sample | Gel time | 1200°F (650°C) | 1800°F (980°C) | 2000°F (1090°C) | 2500°F (1370°C) |
|---|---|---|---|---|---|
| 3 | 4 min. | .010 | .003 | .001− | .005− |
| 2 | 8 min. | .002 | .001− | .003 | .004− |
| 5 | 6 min. | .006 | .004 | .003 | .006− |
| 7 | Overnight | .004 | .003 | .004 | .009− |
| 10 | 10 min. | .008 | .001 | .001− | .037− |
| 11 | 1 1/2 min. | .005 | .004 | .011 | .011− |
| 12 | 2 min. | .008 | .003 | .002 | .016− |
| 13 | 4 min. | .002 | .000 | .002− | .020− |
| 14 | 10 min. | .002 | .005 | .003 | .011 |
| 16 | Overnight | .016 | .015 | .016 | .013− |
| 18 | 7 min. | .006 | .009 | .005 | .026− |
| 17 | 28 min. | .005 | .006 | .004 | .022− |
| 19 | Overnight | .004 | .003− | .001− | .007− |
| 27 | Overnight | .008 | .010− | .000 | .012− |
| 30 | 2 hrs. | .002 | .005 | .009 | .002− |
| 31 | 9 min. | .003 | .001− | .008 | .010− |
| 37 | Overnight | .002 | .004 | .002− | .013− |
| 39 | 15 min. | .001 | .005 | .007 | .024− |
| 40 | 8 min. | | .004 | .004 | .021− |
| 41 | 11 min. | .005− | .005 | .004 | .025− |
| 24 | 60 min.+ | | .004 | .006 | .015− |

## Claims

1. A method of making a refractory shape comprising mixing a refractory material with, as binder, an aqueous zirconia sol and then forming the mix into the desired shape characterized in that the aqueous zirconia sol is an acid-stabilized, aqueous colloidal zirconia sol and that the refractory material comprises an active refractory material capable of gelling the sol and optionally a relatively inert refractory material, the active refractory material being present in an amount effective to gel the sol and wherein, after the mix has been formed into the desired shape, the sol is allowed to gel.

2. The method according to claim 1, which further comprises the steps of drying the shape and the firing to a temperature sufficient to harden the shape.

3. The method according to either of claims 1 or 2, wherein the active refractory material is selected from alkali and alkaline earth aluminates, silicates, zirconates, stannates, titanates, zirconium silicates and oxides.

4. The method according to claim 3, wherein the active refractory material is selected from calcined magnesium oxide, electrically fused magnesium oxide, calcium oxide, electrically fused calcium oxide, mono calcium aluminate, calcium aluminate cement, fused cordierite, high alkali glass, magnesium aluminate, magnesium aluminum silicate, magnesium zirconate, magnesium silicate, magnesium

8

zirconium silicate, magnesium ferrite, magnesium titanate, magnesium stannate, calcium zirconate, calcium silicate, calcium zirconium silicate, calcium titanate, calcium stannate, barium zirconate, barium aluminum silicate, barium aluminate, barium zirconium silicate, barium stannate, barium titanate, barium silicate, strontium zirconate, strontium stannate, strontium zirconium silicate, strontium silicate, strontium aluminum silicate, strontium titanate, electrically fused calcium oxide stabilized zirconia, electrically fused magnesium oxide stabilized zirconia, iron chromite, wollastonite, bentonite, strontium aluminate, forsterite, calcium aluminum silicate, fluorspar, fluorbarite, lithium zirconate, lithium aluminate, lithium silicate, lithium aluminum silicate, lithium titanate or lithium zirconium silicate.

5. The method according to any one of claims 1 to 4, wherein the mix is of a pourable consistency and the shape is formed by pouring the mix into a mold, allowing the mix to harden, and removing the hardened shape from the mold.

6. The method according to any one of claims 1 to 4, wherein the mix is made to a consistency suitable for injection molding, then adding the mix to an injection molding means whereby said mix is then injected into a closed mold, allowing the mix to gel and removing the shape from the mold.

7. The method according to any one of claims 1 to 4, comprising placing the mix into a mold form, molding the mix into final shape, allowing the mix to gel and removing the gelled refractory shape from the mold.

8. The method according to any one of claims 1 to 4, wherein the refractory shape is a coating.

9. The method according to any one of claims 1 to 4, wherein the refractory shape in a shell mold.

10. The method according to any one of claims 1 to 9, wherein the time for gelation is from 5 to 30 minutes.

11. A method of making a refractory casting mold comprising the steps of:

a) making a mixture of an acid-stabilized, aqueous, colloidal zirconia sol and a refractory material, said refractory material comprising an active refractory material capable of gelling said sol after a suitable non-gel working period;

b) applying said mixture to a pattern mold;

c) allowing said mixture to gel on said pattern; and

d) removing the pattern from the gelled mixture.

12. The method according to claim 11, wherein the gelled mixture of step d) is dried and is heated to a suitable temperature to receive molten metal.

13. The method of making a refractory casting mold according to either of claims 11 or 12, wherein the active refractory material is selected from alkali and alkaline earth aluminates, silicates, zirconates, stannates, titanates, zirconium silicates and oxides.

14. The method of making a refractory casting mold according to claim 13, wherein the active refractory material is selected from calcined magnesium oxide, electrically fused magnesium oxide, calcium oxide, electrically fused calcium oxide, mono calcium aluminate, calcium aluminate cement, fused cordierite, high alkali glass, magnesium aluminate, magnesium aluminum silicate, magnesium zirconate, magnesium silicate, magnesium zirconium silicate, magnesium ferrite, magnesium titanate, magnesium stannate, calcium zirconate, calcium silicate, calcium zirconium silicate, calcium titanate, calcium stannate, barium zirconate, barium aluminum silicate, barium aluminate, barium zirconium silicate, barium stannate, barium titanate, barium silicate, strontium zirconate, strontium stannate, strontium zirconium silicate, strontium silicate, strontium aluminum silicate, strontium titanate, electrically fused calcium oxide stabilized zirconia, electrically fused magnesium oxide stabilized zirconia, iron chromite, wollastonite, bentonite, strontium aluminate, forsterite, calcium aluminum silicate, fluorspar, fluorbarite, lithium zirconate, lithium aluminate, lithium silicate, lithium aluminum silicate, lithium titanate or lithium zirconium silicate.

15. The method according to any one of claims 11 to 14, additionally comprising after the step of applying said mixture to said pattern mold, sprinkling coarse refractory over the coated mold, allowing the resultant coating to gel, applying a second coating of said mixture to said coated pattern mold, sprinkling coarse refractory on said second coating, allowing said second coating to gel, and repeating the coating and sprinkling process to form a refractory shell of sufficient thickness for metal casting over the pattern, removing the pattern mold from the resultant shell, drying and heating said shell to a suitable temperature to form a shell mold for receiving molten metal.

16. The method of making a metal casting mold according to claim 15, wherein the refractory from the first coating of said mixture is different from the refractory on the second coating of said mixture.

17. The method of making a metal casting comprising forming a metal casting mold according to any one of claims 11 to 16, and pouring metal into said mold.

**Patentansprüche**

1. Verfahren zur Herstellung einer feuerfesten Form, umfassend des Vermischen eines feuerfesten Materials mit einem wäßrigen Zirkonoxidsol als Bindemittel und danach Ausbilden der Mischung zu der gewünschten Form, dadurch gekennzeichnet, daß das wäßrige Zirkonoxidsol ein säurestabilisiertes, wäßriges, kolloidales Zirkonoxidsol ist und daß das feuerfeste Material ein aktives feuerfestes Material, das in der Lage ist, das Sol zu gelieren und wahlweise ein relativ inertes feuerfestes Material umfaßt, wobei das aktive feuerfeste Material in einer zur Gelierung des Sols wirksamen Menge vorliegt und wobei, nachdem die Mischung zur gewünschten Form ausgebildet worden ist, das Sol gelieren gelassen wird.

2. Verfahren nach Anspruch 1, umfassend weiterhin die Stufen des Trocknens der Form und des Erhitzens bzw. Brennens auf eine ausreichende Temperatur, um die Form zu härten.

3. Verfahren nach einem der Ansprüche 1 oder 2, wobei das aktive feuerfeste Material aus Alkali- und Erdalkalialuminaten, Silikaten, Zirkonaten, Stannaten, Titanaten, Zirkonsilikaten und Oxiden gewählt wird.

4. Verfahren nach Anspruch 3, wobei das aktive feuerfeste Material gewählt wird aus kalziniertem Magnesiumoxid, elektrisch geschmolzenem Magnesiumoxid, Calciumoxid, elektrisch geschmolzenem Calciumoxid, Monocalciumaluminat, Calciumaluminat-Zement, geschmolzenem Cordierit, Glas mit hohem Alkaligehalt, Magnesiumaluminat, Magnesiumaluminiumsilikat, Magnesiumzirkonat, Magnesiumsilikat, Magnesiumzirkonsilikat, Magnesiumferrit, Magnesiumtitanat, Magnesiumstannat, Calciumzirkonat, Calciumsilikat, Calciumzirkonsilikat, Calciumtitanat, Calciumstannat, Bariumzirkonat, Bariumaluminiumsilikat, Bariumaluminat, Bariumzirkonsilikat, Bariumstannat, Bariumtitanat, Bariumsilikat, Strontiumzirkonat, Strontiumstannat, Strontiumzirkonsilikat, Strontiumsilikat, Strontiumaluminiumsilikat, Strontiumtitanat, mit elektrisch geschmolzenem Calciumoxid stabilisiertem Zirkonoxid, mit elektrisch geschmolzenem Magnesiumoxid stabilisiertem Zirkonoxid, Eisenchromit, Wollastonit, Bentonit, Strontiumaluminat, Forsterit, Calciumaluminiumsilikat, Flußspat, Fluorbarit, Lithiumzirkonat, Lithiumaluminat, Lithiumsilikat, Lithiumaluminiumsilikat, Lithiumtitanat oder Lithiumzirkonsilikat.

5. Verfahren nach einem der Ansprüche 1 bis 4, wobei die Mischung eine gießfähige Konsistenz besitzt und die Form durch Gießen der Mischung in eine Gießform, Härtenlassen der Mischung und Entfernen der gehärteten Form aus der Gießform ausgebildet wird.

6. Verfahren nach einem der Ansprüche 1 bis 4, wobei der Mischung eine zum Spritzgießen geeignete Konsistenz verliehen wird, die Mischung dann in eine Spritzgußvorrichtung eingebracht wird, wobei die Mischung dann in eine geschlossene Hohlform eingespritzt wird, die Mischung gelieren gelassen wird und die Form aus der Hohlform entnommen wird.

7. Verfahren nach einem der Ansprüche 1 bis 4, umfassend das Einbringen der Mischung in eine Formereiform, Formen der Mischung zur Endform, Gelierenlassen der Mischung und Entfernen der gelierten, feuerfesten Form aus der Formereiform.

8. Verfahren nach einem der Ansprüche 1 bis 4, wobei die feuerfeste Form eine Beschichtung bzw. ein Überzug ist.

9. Verfahren nach einem der Ansprüche 1 bis 4, wobei die feuerfeste Form eine Hohl- bzw. Schalenform ist.

10. Verfahren nach einem der Ansprüche 1 bis 9, wobei die Zeit zur Gelierung 5 bis 30 Minuten beträgt.

11. Verfahren zur Herstellung einer feuerfesten Gießform, umfassend folgende Stufen:

a) Herstellen einer Mischung aus einem säurestabilisierten, wäßrigen, kolloidalen Zirkonoxidsol und einem feuerfesten Material, wobei das feuerfeste Material ein aktives feuerfestes Material, das in der Lage ist, das Sol nach einer geeigneten Nichtgel-Arbeitszeit zu gelieren, umfaßt;

b) Auftragen der Mischung auf eine Musterform;

c) Gelierenlassen der Mischung auf dem Muster; und

d) Entfernen des Musters von der gelierten Mischung.

12. Verfahren nach Anspruch 11, wobei die gelierte Mischung aus Stufe d) getrocknet und auf eine geeignete Temperatur erhitzt wird, um geschmolzenes Metall aufzunehmen.

13. Verfahren zur Herstellung einer feuerfesten Gießform nach Anspruch 11 oder 12, wobei das aktive feuerfeste Material aus Alkali- und Erdalkalialuminaten, Silikaten, Zirkonaten, Stannaten, Titanaten, Zirkonsilikaten und Oxiden gewählt wird.

14. Verfahren zur Herstellung einer feuerfesten Gießform nach Anspruch 13, wobei das aktive feuerfeste Material gewählt wird aus kalziniertem Magnesiumoxid, elektrisch geschmolzenem Magnesiumoxid, Calciumoxid, elektrisch geschmolzenem Calciumoxid, Monocalciumaluminat, Calciumaluminat-Zement, geschmolzenem Cordierit, Glas mit hohem Alkaligehalt, Magnesiumaluminat, Magnesiumaluminiumsilikat, Magnesiumzirkonat, Magnesiumsilikat, Magnesiumzirkonsilikat, Magnesiumferrit, Magnesiumtitanat, Magnesiumstannat, Calciumzirkonat, Calciumsilikat, Calciumzirkonsilikat, Calciumtitanat, Calciumstannat, Bariumzirkonat, Bariumaluminiumsilikat, Bariumaluminat, Bariumzirkonsilikat, Bariumstannat, Bariumtitanat, Bariumsilikat, Strontiumzirkonat, Strontiumstannat, Strontiumzirkonsilikat, Strontiumsilikat, Strontiumaluminiumsilikat, Strontiumtitanat, mit elektrisch geschmolzenem Calciumoxid stabilisiertem Zirkonoxid, mit elektrisch geschmolzenem Magnesiumoxid stabilisiertem Zirkonoxid, Eisenchromit, Wollastonit, Bentonit, Strontiumaluminat, Forsterit, Calciumaluminiumsilikat, Flußspat, Fluorbarit, Lithiumzirkonat, Lithiumaluminat, Lithiumsilikat, Lithiumaluminiumsilikat, Lithiumtitanat oder Lithiumzirkonsilikat.

15. Verfahren nach einem der Ansprüche 11 bis 14, umfassend weiterhin, nach der Stufe des Auftragens der Mischung auf die Musterform, das Aufstreuen von grobem, feuerfestem Material über die beschichtete Form, Gelierenlassen der resultierenden Beschichtung, Auftragen einer zweiten Beschichtung aus der Mischung auf die beschichtete Musterform, Aufstreuen von grobem, feuerfestem Material auf die zweite Beschichtung, Gelierenlassen der zweiten Beschichtung und Wiederholen der Beschichtungs- und Aufstreubehandlung, um eine feuerfeste Schale ausreichender Dicke für das Metallgießen über dem Muster zu bilden, Entfernen der Musterform von der resultierenden Schale, Trocknen und Erhitzen der

# 0 093 212

Schale auf eine geeignete Temperatur, um eine Schalenform zur Aufnahme von geschmolzenem Metall zu bilden.

16. Verfahren zur Herstellung einer Metallgießform nach Anspruch 15, wobei das feuerfeste Material aus der ersten Beschichtung der Mischung sich von dem feuerfesten Material auf der zweiten Beschichtung der Mischung unterscheidet.

17. Verfharen zur Herstellung eines Metallgußstückes, umfassend das Ausbilden einer Metallgießform nach einem der Ansprüche 11 bis 16 und das Eingießen von Metall in diese Form.

## Revendications

1. Procédé de fabrication d'un corps réfractaire, qui comporte les opérations consistant à mélanger à un matériau réfractaire un liant constitué par un sol de zircone aqueux, puis à modeler le mélange pour lui donner la forme voulue, caractérisé en ce que le sol de zircone aqueux est un sol colloïdal aqueux stabilisé à l'acide, et en ce que le matériau réfractaire comprend un matériau réfractaire actif capable de gélifier le sol, et, facultativement, un matériau réfractaire relativement inerte, la quantité de matériau réfractaire actif étant suffisante pour gélifier efficacement le sol, et la gélification du sol s'effectuant après que le mélange ait été modelé pour prendre la forme voulue.

2. Procédé selon la revendication 1, caractérisé en ce qu'il comporte, en plus, les opérations consistant à faire sécher le corps modelé et à le chauffer de manière à la porter à une température suffisante pour provoquer son durcissement.

3. Procédé selon l'une des revendications 1 ou 2, caractérisé en ce que le matériau réfractaire actif est choisi dans le groupe des aluminates, silicates, zirconates, stannates et titanates alcalins et alcalino-terreux, et des silicates et oxydes de zirconium.

4. Procédé selon la revendication 3, caractérisé en ce que le matériau réfractaire actif est choisi dans le groupe de l'oxyde de magnésium calciné, de l'oxyde de magnésium fondu électriquement, de l'oxyde de calcium, de l'oxyde de calcium fondu électriquement, du monoaluminate ds calcium, du ciment d'aluminate de calcium, de la cordiérite fondue, du verre fortement alcalin, de l'aluminate de magnésium, du silicate de magnésium et d'aluminium, du zirconate de magnésium, du silicate de magnésium, du silicate de magnésium et de zirconium, de la ferrite de magnésium, du titanate de magnésium, du stannate de magnésium, de zirconate de calcium, de silicate de calcium, du silicate de calcium et de zirconium, du titanate de calcium, du stannate de calcium, du zirconate de baryum, du silicate de baryum et d'aluminium, de l'aluminate de baryum, du silicate de baryum et de zirconium, du stannate de baryum, du titanate de baryum, du silicate de baryum, du zirconate de strontium, du stannate de strontium, du silicate de strontium et de zirconium, du silicate de strontium, du silicate de strontium et d'aluminium, du titanate de strontium, de la zircone stabilisée à l'oxyde de calcium fondu électriquement, de la zircone stabilisée à l'oxyde de magnésium fondu électriquement, de la chromite au fer, de la wollastonite, de la bentonite, de l'aluminate de strontium, de la forstérite, du silicate de calcium et d'aluminium, du spathfluor, de la fluorbarite, du zirconate de lithium, de l'aluminate de lithium, du silicate de lithium, du silicate de lithium et d'aluminium, du titanate de lithium et du silicate de lithium et de zirconium.

5. Procédé selon l'une des revendications 1 à 4, caractérisé en ce que le mélange a une consistance lui permettant de couler et en ce que le corps modelé est obtenu par coulée dans un moule, en laissant le mélange durcir et en enlevant du moule le corps moulé.

6. Procédé selon l'une des revendications 1 à 4, caractérisé en ce que l'on donne au mélange une consistance permettant le moulage par injection et que l'on introduit le mélange dans un dispositif de moulage par injection, ledit mélange étant ensuite injecté dans un moule fermé, et en ce qu'après la gélification du mélange, on enlève le corps du moule.

7. Procédé selon l'une des revendications 1 à 4, caractérisé en ce que l'on introduit le mélange dans un moule, en ce que l'on moule le mélange pour qu'il prenne sa forme définitive, et qu'après la gélification du mélange, on enlève du moule le corps réfractaire gélifié.

8. Procédé selon l'une des revendications 1 à 4, caractérisé en ce que le corps réfractaire est un revêtement.

9. Procédé selon l'une des revendications 1 à 4, caractérisé en ce que le corps réfractaire est un moule à coquille.

10. Procédé selon l'une des revendications 1 à 9, caractérisé en ce que la durée de la gélification est comprise entre 5 et 30 minutes.

11. Procédé de fabrication d'un moule de fonderie réfractaire, caractérisé en ce qu'il comporte les opérations consistant:

a) à faire un mélange d'un sol de zircone colloïdal aqueux stabilisé à l'acide et d'un matériau réfractaire, ledit matériau réfractaire comprenant un matériau réfractaire actif capable de gélifier ledit sol après une période convenable de travail sans gélification;

b) à placer ledit mélange dans un moule à gabarit;

c) à laisser ledit mélange se gélifier sur le gabarit;

d) à enlever le gabarit du mélange gélifié.

12. Procédé selon la revendication 11, caractérisé en ce que le mélange gélifié obtenu au stade d) est séché et chauffé à une température convenable pour recevoir du métal fondu.

11

13. Procédé de fabrication d'un moule réfractaire selon l'une des revendications 11 ou 12, caractérisé en ce que le matériau réfractaire actif est choisi dans le groupe des aluminates, silicates, zirconates, stannates, titanates alcalins et alcalino-terreux et des silicates et oxydes de zirconium.

14. Procédé de fabrication d'un moule réfractaire selon la revendication 13, caractérisé en ce que le matériau réfractaire est choisi dans le groupe de l'oxyde de magnésium calciné, de l'oxyde de magnésium fondu électriquement, de l'oxyde de calcium, de l'oxyde de calcium fondu électriquement, de monoaluminate de calcium, du ciment d'aluminate de calcium, de la cordiérite fondue, du verre fortement alcalin, de l'aluminate de magnésium, du silicate de magnésium et d'aluminium, du zirconate de magnésium, de silicate de magnésium, du silicate de magnésium et de zirconium, de la ferrite de magnésium, du titante de magnésium, du stannate de magnésium, du zirconate de calcium, du silicate de calcium, du silicate de calcium et de zirconium, du titanate de calcium, du stannate de calcium, du zirconate de baryum, du silicate de baryum et d'aluminium, de l'aluminate de baryum, du silicate de baryum et de zirconium, du stannate de baryum, du titante de baryum, du silicate de baryum, du zirconate de strontium, du stannate de strontium, du silicate de strontium et de zirconium, du silicate de strontium, du silicate de strontium et d'aluminium, du titanate de strontium, de la zircone stabilisée à l'oxyde de calcium fondu électriquement, de la zircone stabilisée à l'oxyde de magnésium fondu électriquement, de la chromite de fer, de la wollastonite, de la bentonite, de l'aluminate de strontium, de la forstérite, du silicate de calcium et d'aluminium, du spath fluor, de la fluobarite, du zirconate de lithium, de l'aluminate de lithium, du silicate de lithium, du silicate de lithium et d'aluminium, du titanate de lithium, ou du silicate de lithium et de zirconium.

15. Procédé selon l'une des revendications 11 à 14, caractérisé en ce qu'il comporte, après l'opération consistant à placer ladit mélange dans un moule à gabarit, des opérations consistant à saupoudrer de réfractaire grossier le moule revêtu, à laisser le revêtement obtenu se gélifier, à appliquer une seconde couche dudit mélange sur le moule à gabarit revêtu, à saupoudrer de réfractaire grossier ladite seconde couche de revêtement, à laisser ladite seconde couche se gélifier, et à répéter les opérations de revêtement et de saupoudrage de manière à obtenir la formation d'une coquille réfractaire assez épaisse pour permettre la coulée de métal sur le gabarit, à enlever le moule à gabarit de la coquille obtenue, à faire sécher et à chauffer cette coquille jusqu'à une température permettant d'obtenir un moule à coquille pouvant recevoir du métal fondu.

16. Procédé de fabrication d'un moule pour coulée de métal selon la revendication 15, caractérisé en ce que le réfractaire du premier revêtement dudit mélange est différent du réfractaire situé sur le deuxième revêtement dudit mélange.

17. Procédé de fabrication d'un moulage métallique comportant les opérations consistant à réaliser un moule de coulée selon l'une des revendications 11 à 16, et à couler du métal dans ce moule.